# EUROPEAN PATENT APPLICATION

(11) **EP 4 826 824 A1**
(43) Date of publication of application: **21.10.2026**
(21) Application number: 25208848.9
(22) Date of filing: 15.10.2025
(51) Int. Cl.: H01M 10/0565, H01M 10/0525, H01M 50/417

(54) **PREPARATION METHOD FOR ELECTROLYTE SEPARATOR OF SEMI-SOLID-STATE SECONDARY BATTERY, SEMI-SOLID-STATE SECONDARY BATTERY, ENERGY STORAGE APPARATUS, AND ELECTRICAL DEVICE**

(30) Priority: 14.04.2025 CN 202510465131
(71) Applicant: Zhejiang Jinko Energy Storage Co., Ltd., Jiaxing, Zhejiang (CN)
(72) Inventor: SHI, Haotian, JIAXING (CN); CHEN, Jing, JIAXING (CN); YANG, Zixiang, JIAXING (CN); ZHANG, Luhua, JIAXING (CN)
(74) Representative: DREISS Patentanwälte PartG mbB

(57) **Abstract**

Provided is preparation method for electrolyte separator of semi-solid-state secondary battery, semi-solid-state secondary battery, energy storage apparatus, and electrical device. Preparation method includes following steps: coating first solution on surface of base film, and performing first curing to form first intermediate layer on surface of base film, first solution including linear monomer, first thermal initiator, and first electrolyte solution; and coating second solution on surface of first intermediate layer, and performing second curing to form second intermediate layer on surface of base film, second solution including multi-branched monomer, second thermal initiator, and second electrolyte solution; and coating third solution on surface of second intermediate layer, and performing third curing to obtain electrolyte separator, third solution including nitrile-containing monomer, third thermal initiator, and third electrolyte solution. Electrolyte separator has excellent flame retardancy, ionic conductivity, mechanical performance, and thermal stability, so that semi-solid-state secondary battery can have excellent safety performance and electrochemical performance.

## Description

### TECHNICAL FIELD

The present disclosure relates to the technical field of energy storage, and in particular, to a preparation method for an electrolyte separator of a semi-solid-state secondary battery, a semi-solid-state secondary battery, an energy storage apparatus, and an electrical device.

### BACKGROUND

Lithium-ion batteries play a vital role in stationary energy storage systems due to high energy density and reliable power supply. As demands for next-generation batteries with higher performance continue to grow, efforts are required to develop new electrode materials, electrolyte solutions, and battery systems. An ideal electrolyte solution should be a good lithium-ion conductor with high chemical stability and may not cause other parasitic reactions on an electrode surface except migration of lithium ions. Although conventional organic liquid electrolyte solutions have high ionic conductivity, inherent instability thereof, such as volatility and flammability, poses great safety risks to batteries. At present, solutions to the safety problem of the lithium batteries mainly include: a solution of an all-solid-state lithium-ion battery, a solution of adding a flame retardant to an electrolyte solution, and a solution of a semi-solid-state electrolyte. The semi-solid-state electrolyte is a new type of functional polymer material between an all-solid-state polymer electrolyte and a liquid electrolyte, which has stable electrochemical performance and can be applied to secondary batteries in the form of a separator and an electrolyte material.

The current semi-solid-state electrolyte still has some shortcomings in performance, which makes it difficult for secondary batteries to balance electrochemical performance and safety performance.

### SUMMARY

The present disclosure proposes a preparation method for an electrolyte separator of a semi-solid-state secondary battery, a semi-solid-state secondary battery, an energy storage apparatus, and an electrical device, intended to solve the technical problems mentioned in the Background above.

In a first aspect, some embodiments of the present disclosure provide a preparation method for an electrolyte separator of a semi-solid-state secondary battery, wherein the preparation method includes the following steps:
providing a base film, coating a first solution on a surface of the base film, the first solution including a linear monomer, a first thermal initiator, and a first electrolyte solution, and performing first curing to form a first intermediate layer on the surface of the base film;
coating a second solution on a surface of the first intermediate layer, the second solution including a multi-branched monomer, a second thermal initiator, and a second electrolyte solution, and performing second curing to form a second intermediate layer on the surface of the base film; and
coating a third solution on a surface of the second intermediate layer, the third solution including a nitrile-containing monomer, a third thermal initiator, and a third electrolyte solution, and performing third curing to form a gel-like functional layer on the surface of the base film to obtain the electrolyte separator;
wherein based on 100% total mass content of the first solution, the second solution, and the third solution, total mass content of the linear monomer, the multi-branched monomer, and the nitrile-containing monomer is in a range of 3% to 8%, and a mass ratio of the linear monomer, the multi-branched monomer, and the nitrile-containing monomer is in a range of (12 to 16):(3 to 6):1.

In some embodiments, the linear monomer includes at least one of triethylene glycol dimethacrylate, methyl methacrylate, vinyl acetate, trifluoroethyl methacrylate, and ethylene glycol diacrylate.

In some embodiments, the multi-branched monomer includes at least one of trimethylolpropane trifluoroacrylate, pentaerythritol tetraacrylate, trimethylolpropane, pentaerythritol, four-arm polyethylene glycol-tetraacrylate, and hyperbranched polyester polyol.

In some embodiments, the nitrile-containing monomer includes at least one of acrylonitrile and methacrylonitrile.

In some embodiments, the first electrolyte solution, the second electrolyte solution, and the third electrolyte solution independently include a lithium salt, an electrolyte, and a flame retardant, content of the flame retardant being in a range of 2% to 15%.

In some embodiments, the lithium salt includes one or more of one or more of lithium hexafluorophosphate (LiPF₆), lithium bis(trifluoromethanesulphonyl)imide (LiFSI), lithium tetrafluoroborate (LiBF₄), lithium bis(oxalato)borate (LiBOB), lithium difluoro(oxalato)borate (LiDFOB), and lithium bis(trifluoromethylsulfonyl)imide (LiTFSI).

In some embodiments, the electrolyte includes one or more of ethylene carbonate (EC), propylene carbonate (PC), butanedinitrile (BC), diethyl carbonate (DEC), dimethyl carbonate (DMC), dimethoxyethane (DME), ethyl methyl carbonate (EMC), triethyl phosphate (TEP), and fluoroethylene carbonate (FEC).

In some embodiments, the flame retardant includes at least one of a phosphorus-nitrogen composite flame retardant, a phosphorus-based flame retardant, a phosphorus-fluorine composite flame retardant, a phosphazene-based flame retardant, and a bromine-based flame retardant.

In some embodiments, the first thermal initiator, the second thermal initiator, and the third thermal initiator independently include at least one of azobisisobutyronitrile, azobisisovaleronitrile, benzoyl peroxide, dicumyl peroxide, and ammonium persulfate.

In some embodiments, a temperature of the first curing is in a range of 40°C to 60°C, a temperature of the second curing is in a range of 60°C to 80°C, and a temperature of the third curing is in a range of 50°C to 70°C.

In some embodiments, the first curing includes steps of: preheating the base film, which is coated with the first solution, at 40°C to 45°C for 5 min to 10 min, subsequently heating the base film to 55°C to 60°C at a heating rate ≤2°C/min, maintaining the temperature for 50 min to 70 min, and then cooling the base film to room temperature.

In some embodiments, the second curing includes steps of: preheating a composite structure of the base film and the first intermediate layer, which are coated with the second solution, at 60°C to 65°C for 5 min to 10 min, subsequently heating the composite structure to 75°C to 80°C at a heating rate ≤2°C/min, maintaining the temperature for 25 min to 35 min, and then cooling the composite structure to the room temperature.

In some embodiments, the third curing includes steps of: preheating a composite structure of the base film and the second intermediate layer, which are coated with the third solution at 50°C to 55°C for 5 min to 10 min, subsequently heating the composite structure to 65°C to 75°C at a heating rate ≤2°C/min, maintaining the temperature for 110 min to 130 min, and then cooling the composite structure to the room temperature.

In a second aspect, some embodiments of the present disclosure further propose a semi-solid-state secondary battery, including a positive electrode plate, an electrolyte separator, and a negative electrode plate, the electrolyte separator being prepared by the preparation method as described in the first aspect.

In some embodiments, in the electrolyte separator, the base film has a first side facing the positive electrode plate and a second side facing the negative electrode plate, the functional layer is disposed on at least one of the first side and the second side, and a thickness of the functional layer is in a range of 10 µm to 30 µm.

In a third aspect, some embodiments of the present disclosure further propose an energy storage apparatus, including the semi-solid-state secondary battery as described in the second aspect.

In a fourth aspect, some embodiments of the present disclosure further propose an electrical device, including the semi-solid-state secondary battery as described in the third aspect.

Compared with the prior art, the technical solution achieves at least the following technical effects.

According to the technical solution in the present disclosure, a gel-like functional layer with a gradient-like structure is formed on the surface of the base film by using a gradient copolymerization technology, and the electrolyte separator prepared accordingly has excellent flame retardancy as well as excellent ionic conductivity, mechanical performance, and thermal stability, so that the semi-solid-state secondary battery prepared can have excellent performance such as rate performance, cycling performance, and safety performance. Compared with the conventional copolymerization method, the gradient copolymerization manner in the present disclosure helps to prevent stress concentration in the functional layer and helps to improve electrochemical stability of the electrolyte separator. During the preparation of the electrolyte separator, firstly, a first solution containing a linear monomer is applied to the surface of the base film and is initially polymerized to form a flexible first intermediate layer. Then, a second solution is applied on a surface of the first intermediate layer, and a multi-branched monomer in the second solution is further polymerized with a first polymerization layer to form a second intermediate layer. The second intermediate layer is a three-dimensional network skeleton structure, which can provide a continuous ion transmission channel and help improve ion mobility (conductivity) of the electrolyte separator. In addition, the three-dimensional network skeleton structure can also provide good physical support, taking into account both flexibility and material stability. These characteristics enable a finally prepared electrolyte separator to obtain relatively excellent rate performance and cycling performance. By coating a third solution on a surface of the second intermediate layer and further polymerizing the third solution, polarity of the outermost surface of the finally prepared electrolyte separator is enhanced, thereby improving interfacial compatibility between the electrolyte separator and the electrolyte, reducing interface resistance, and further improving rate performance and cycling performance of the semi-solid-state secondary battery.

### BRIEF DESCRIPTION OF DRAWINGS

The present disclosure is further described below with reference to the accompanying drawings and embodiments.

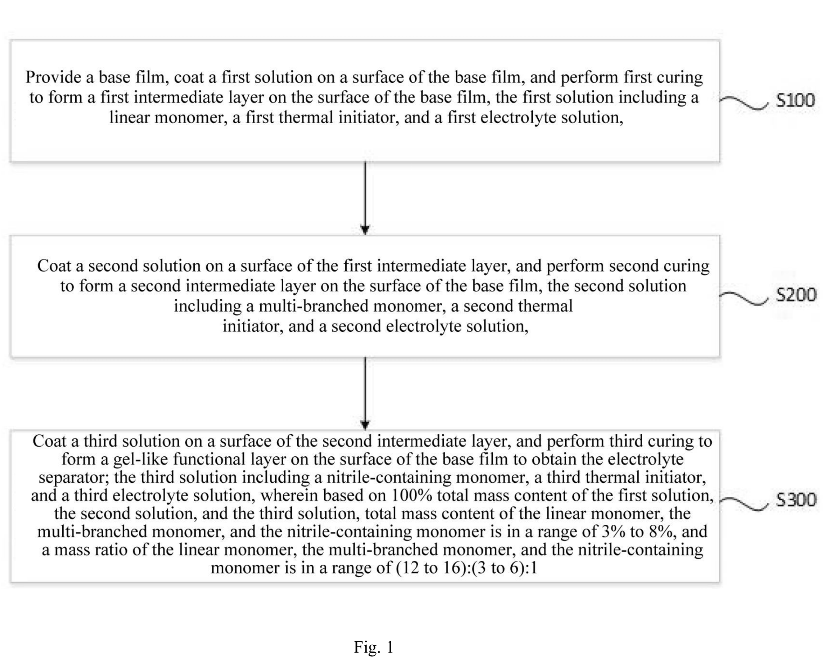

FIG. 1 is a process flowchart of a preparation method for an electrolyte separator of a semi-solid-state secondary battery according to the present disclosure.

### DESCRIPTION OF EMBODIMENTS

The raw materials and devices used in the present disclosure, if not specifically stated, are common raw materials and devices in the art; and the methods used in the present disclosure, if not specifically stated, are conventional methods in the art.

Unless otherwise specified, meanings of the terms in this specification are the same as those generally understood by those skilled in the art, but if there is any conflict, the meanings shall be subject to the definitions in this specification.

Herein, terms "comprise", "include", "contain", "have", or other variations thereof are intended to cover non-closed inclusions, and no distinction is made between these terms. The term "include" means that other steps and components that do not affect the final result may be added. The term "include" also includes terms "consist of" and "essentially consist of". Compositions and methods/processes of the present disclosure include, consist of, and essentially consist of essential elements and limitation items described herein and any additional or optional compositions, components, steps, or limitation items described herein.

All numerical values or expressions related to amounts of components, process conditions and the like used in the description and claims are to be understood as modified by "about" in all instances. All ranges related to the same component or property are inclusive of endpoints. The endpoints may be independently combined. Since these ranges are continuous, they include every value between the minimum value and maximum value. It should also be understood that any numerical range recited in the present disclosure is intended to include all sub-ranges within that range.

It should be understood that the term "and/or" used in the present disclosure is merely an association relationship describing associated objects, indicating that three relationships may exist. For example, A and/or B indicates that there are three cases of A alone, A and B together, and B alone. In addition, the character "/" herein generally means that associated objects are in an "or" relationship.

A semi-solid-state secondary battery is a new type of functional polymer material between an all-solid-state polymer electrolyte and a liquid electrolyte. The current semi-solid electrolyte still has some shortcomings in performance, such as poor ionic conductivity, thermal stability, and interface compatibility with an electrolyte. These shortcomings make it difficult for secondary batteries to balance safety performance with electrochemical performance such as rate performance and cycling performance.

Based on this, in a first aspect, some embodiments of the present disclosure propose a preparation method for an electrolyte separator of a semi-solid-state secondary battery.

Referring to FIG. 1, in some embodiments of the present disclosure, the preparation method includes the following steps.

In S100, a base film is provided, a first solution is applied on a surface of the base film, the first solution including a linear monomer, a first thermal initiator, and a first electrolyte solution, and first curing is performed to form a first intermediate layer on the surface of the base film.

In S200, a second solution is applied on a surface of the first intermediate layer, the second solution including a multi-branched monomer, a second thermal initiator, and a second electrolyte solution, and second curing is performed to form a second intermediate layer on the surface of the base film.

In S300, a third solution is applied on a surface of the second intermediate layer, the third solution including a nitrile-containing monomer, a third thermal initiator, and a third electrolyte solution, and third curing is performed to form a gel-like functional layer on the surface of the base film to obtain the electrolyte separator;

wherein based on 100% total mass content of the first solution, the second solution, and the third solution, total mass content of the linear monomer, the multi-branched monomer, and the nitrile-containing monomer is in a range of 3% to 8%, and a mass ratio of the linear monomer, the multi-branched monomer, and the nitrile-containing monomer is in a range of (12 to 16):(3 to 6):1.

It is to be noted that in some embodiments of the present disclosure, the first intermediate layer is a gel-like polymer layer formed by the first solution after the first curing, the second intermediate layer is a gel-like polymer layer formed jointly by the second solution and the first intermediate layer after the second curing, and the functional layer is a gel-like polymer layer formed jointly by the third solution and the second intermediate layer after the third curing.

According to the technical solution in the present disclosure, a gel-like functional layer with a gradient-like structure is formed on the surface of the base film by using a gradient copolymerization technology, and the electrolyte separator prepared accordingly has excellent flame retardancy as well as excellent ionic conductivity, mechanical performance, and thermal stability, so that the semi-solid-state secondary battery prepared can have excellent performance such as rate performance, cycling performance, and safety performance. Compared with the conventional copolymerization method, the gradient copolymerization manner in the present disclosure helps to prevent stress concentration in the functional layer and helps to improve electrochemical stability of the electrolyte separator. During the preparation of the electrolyte separator, firstly, a first solution containing a linear monomer is applied to the surface of the base film and is initially polymerized to form a flexible first intermediate layer. Then, a second solution is applied on a surface of the first intermediate layer, and a multi-branched monomer in the second solution is further polymerized with a first polymerization layer to form a second intermediate layer. The second intermediate layer is a three-dimensional network skeleton structure, which can provide a continuous ion transmission channel and help improve ion mobility (conductivity) of the electrolyte separator. In addition, the three-dimensional network skeleton structure can also provide good physical support, taking into account both flexibility and material stability. These characteristics enable a finally prepared electrolyte separator to obtain relatively excellent rate performance and cycling performance. By coating a third solution on a surface of the second intermediate layer and further polymerizing the third solution, polarity of the outermost surface of the finally prepared electrolyte separator is enhanced, thereby improving interfacial compatibility between the electrolyte separator and the electrolyte, reducing interface resistance, and further improving rate performance and cycling performance of the semi-solid-state secondary battery.

The preparation method for an electrolyte separator in the present disclosure is described in more detail below.

In some embodiments of the present disclosure, based on 100% total mass content of the first solution, the second solution, and the third solution, total mass content of the linear monomer, the multi-branched monomer, and the nitrile-containing monomer is in a range of 3% to 8%, which may specifically be 3%, 4%, 5%, 6%, 7%, 8%, or any value therebetween. A mass ratio of the linear monomer, the multi-branched monomer, and the nitrile-containing monomer is (12 to 16):(3 to 6):1. A mass ratio of the linear monomer to the nitrile-containing monomer may be 12:1, 13:1, 14:1, 15:1, 16:1, or any ratio therebetween. A mass ratio of the multi-branched monomer to the nitrile-containing monomer may specifically be 3:1, 4:1, 5:1, 6:1, or any ratio therebetween.

By controlling mass content of the linear monomer, the multi-branched monomer, and the nitrile-containing monomer within the above range, it is conducive to adjusting final polymerization morphology of the functional layer to a jelly-like gel structure. Under the morphology, the electrolyte separator has relatively excellent electrochemical performance and flame retardancy. When the mass content of the linear monomer, the multi-branched monomer, and the nitrile-containing monomer is not within the above range, either the functional layer may become hard and brittle, thereby causing a significant decrease in the cycling performance of the semi-solid-state secondary battery; or the first solution, the second solution, and the third solution cannot be cured from a liquid state to a gel state, or curing times of the first solution, the second solution, and the third solution are excessively long, affecting preparation efficiency of the electrolyte separator.

In some embodiments of the present disclosure, the base film may be made of polyethylene, polypropylene, or the like, and certainly may be made of other base film materials commonly used in semi-solid-state electrolyte separators, which is not specifically limited in the embodiments of the present disclosure.

In some embodiments, the linear monomer includes at least one of triethylene glycol dimethacrylate, methyl methacrylate, vinyl acetate, trifluoroethyl methacrylate, and ethylene glycol diacrylate. Certainly, those skilled in the art may alternatively select other linear monomers according to an actual situation.

In some embodiments of the present disclosure, the multi-branched monomer may be a fluorine-containing monomer or a fluorine-free monomer. In some embodiments, the multi-branched monomer is a fluorine-containing monomer. A three-dimensional network structure formed by polymerization of the fluorine-containing monomer is conducive to further improving ionic conductivity of the electrolyte separator and is also conducive to improving flame retardancy of the electrolyte separator.

In some embodiments, the fluorine-containing monomer includes one or more of trimethylolpropane trifluoroacrylate and trifluoroethyl methacrylate.

In some embodiments, the fluorine-free monomer includes one or more of pentaerythritol tetraacrylate, trimethylolpropane, pentaerythritol, four-arm polyethylene glycol-tetraacrylate, and hyperbranched polyester polyol.

In some embodiments, the nitrile-containing monomer includes at least one of acrylonitrile and methacrylonitrile. Certainly, those skilled in the art may alternatively select other nitrile-containing monomers according to an actual situation.

In some embodiments, the first thermal initiator includes at least one of azobisisobutyronitrile, azobisisovaleronitrile, benzoyl peroxide, dicumyl peroxide, and ammonium persulfate.

In some embodiments, the second thermal initiator includes at least one of azobisisobutyronitrile, azobisisovaleronitrile, benzoyl peroxide, dicumyl peroxide, and ammonium persulfate.

In some embodiments, the third thermal initiator includes at least one of azobisisobutyronitrile, azobisisovaleronitrile, benzoyl peroxide, dicumyl peroxide, and ammonium persulfate.

In some embodiments, mass content of the first thermal initiator in the first solution is in a range of 0.1% to 0.3%, which may specifically be 0.1%, 0.12%, 0.15%, 0.18%, 0.2%, 0.22%, 0.25%, 0.28%, 0.3%, or any value therebetween; mass content of the second thermal initiator in the second solution is in a range of 0.1% to 0.3%, which may specifically be 0.1%, 0.12%, 0.15%, 0.18%, 0.2%, 0.22%, 0.25%, 0.28%, 0.3%, or any value therebetween; and mass content of the third thermal initiator in the third solution is in a range of 0.1% to 0.3%, which may specifically be 0.1%, 0.12%, 0.15%, 0.18%, 0.2%, 0.22%, 0.25%, 0.28%, 0.3%, or any value therebetween. By controlling the content of the first thermal initiator, the second thermal initiator, and the third thermal initiator respectively within the above range, it is conducive to controlling rates of the first curing, the second curing, and the third curing, thereby preventing occurrence of implosion or an excessively long polymerization time.

In some embodiments, the first electrolyte solution, the second electrolyte solution, and the third electrolyte solution independently include a lithium salt, an electrolyte, and a flame retardant; and in the first electrolyte solution, the second electrolyte solution, or the third electrolyte solution, content of the flame retardant is in a range of 2% to 15%, which may specifically be 2%, 4%, 6%, 8%, 10%, 12%, 15%, or any value therebetween. By adding an appropriate amount of flame retardant to the first electrolyte solution, the second electrolyte solution, and the third electrolyte solution, flame retardancy of the electrolyte separator can be effectively improved.

In more detail, in some embodiments, the lithium salt includes one or more of LiPF₆, LiFSI, LiBF₄, LiBOB, LiDFOB, and LiTFSI. Certainly, those skilled in the art may alternatively select, according to an actual situation, other lithium salts commonly used in the art.

In some embodiments, the electrolyte includes one or more of EC, PC, BC, DEC, DMC, DME, EMC, TEP and FEC. Certainly, those skilled in the art may alternatively select, according to an actual situation, other electrolytes commonly used in the art.

In some embodiments, the flame retardant includes at least one of a phosphorus-nitrogen composite flame retardant, a phosphorus-based flame retardant, a phosphorus-fluorine composite flame retardant, a phosphazene-based flame retardant, a bromine-based flame retardant, and other common organic flame retardants.

In some embodiments, the flame retardant includes an organic flame retardant and an inorganic flame retardant. The organic flame retardant and the inorganic flame retardant may synergistically improve the flame retardancy of the electrolyte separator.

In some embodiments, the phosphorus-nitrogen composite flame retardant includes one or more of ammonium polyphosphate (APP), tripolynitroamine polyphosphate (MPP), a pentaerythritol phosphate-melamine complex, and the like; the phosphorus-based flame retardant includes one or more of triphenyl phosphate (TPP), tricresyl phosphate (TCP), bisphenol A bis(diphenyl phosphate) (BDP), 9,10-dihydro-9-oxa-10-phosphaphenanthrene-10-oxide (DOPO), and the like; the phosphorus-fluorine composite flame retardant includes one or more of tris (2,2,2-trifluoroethyl) phosphate, hexafluorocyclotriphosphazene, and the like; the phosphazene-based flame retardant includes one or more of hexaphenoxycyclotriphosphazene (HPCTP), hexa (4-aminophenoxy) cyclotriphosphazene, hexachlorocyclotriphosphazene, and the like; and the bromine-based flame retardant includes one or more of decabromodiphenyl ether (Deca-BDE), tetrabromobisphenol A (TBBPA), hexabromocyclododecane (HBCD), brominated polystyrene (BPS), brominated epoxy resin (BER), and the like.

In some embodiments, temperatures of the first curing, the second curing, and the third curing are in a range of 40°C to 80°C. Specifically, the temperatures of the first curing, the second curing, and the third curing may independently be 40°C, 50°C, 60°C, 70°C, 80°C, or any value therebetween. By controlling the temperatures of the first curing, the second curing, and the third curing within the above range, it is conducive to controlling the final curing state of the functional layer formed on the surface of the base film to a gel state, and it is also conducive to improving preparation efficiency of the electrolyte separator.

In the above embodiments, the temperature of the first curing is in a range of 40°C to 60°C, which may specifically be 40°C, 45°C, 50°C, 55°C, 60°C, or any value therebetween; the temperature of the second curing is in a range of 60°C to 80°C, which may specifically be 60°C, 65°C, 70°C, 75°C, 80°C, or any value therebetween; and the temperature of the third curing is in a range of 50°C to 70°C, which may specifically be 50°C, 55°C, 60°C, 65°C, 70°C, or any value therebetween. In this way, it is conducive to controlling a degree of polymerization of the linear monomer, the multi-branched monomer, and the nitrile-containing monomer, so that the prepared electrolyte separator has relatively good mechanical performance, electrochemical performance, and flame retardancy, and it is also conducive to improving the preparation efficiency of the electrolyte separator.

In the above embodiments, a duration of the first curing is in a range of 55 min to 70 min, which may specifically be 55 min, 60 min, 65 min, 70 min, or any value therebetween; a duration of the second curing is in a range of 33 min to 42 min, which may specifically be 33 min, 35 min, 37 min, 39 min, 42 min, or any value therebetween; and a duration of the third curing is in a range of 105 min to 130 min, which may specifically be 105 min, 110 min, 115 min, 120 min, 125 min, 130 min, or any value therebetween.

In the above embodiments, the first curing, the second curing, and the third curing each include a preheating stage, a temperature rising stage, and a temperature maintenance stage which are carried out successively. The step-by-step operation of preheating first, then increasing the temperature, and finally maintaining the temperature enhances safety of reactions and also significantly improves controllability of product quality.

In some embodiments, a temperature of the temperature maintenance stage of the first curing is T1, a temperature of the temperature maintenance stage of the second curing is T2, and a temperature of the temperature maintenance stage of the third curing is T3, where T2>T1 and T2<T3. By making T2>T1, it is beneficial for the linear monomer to retain sufficient active groups after first preliminary polymerization to be further polymerized with the multi-branched monomer in the second curing stage to form a gel-like three-dimensional network structure. By making T2<T3, it is conducive to preventing formation of an all-solid-state structure due to further polymerization of the gel-like three-dimensional network structure.

In some embodiments, the first curing includes steps of: preheating the base film, which is coated with the first solution, at 40°C to 45°C for 5 min to 10 min, subsequently heating the base film to 55°C to 65°C, maintaining the temperature for 50 min to 70 min, and then cooling the base film to room temperature. In the preheating stage, the first thermal initiator is activated, and the linear monomer is pre-crosslinked to form a flexible network. In the temperature maintenance stage, the linear monomer is further polymerized into a jelly-like gel state.

In some embodiments, the second curing includes steps of: preheating a composite structure of the base film and the first intermediate layer, which are coated with the second solution, at 60°C to 65°C for 5 min to 10 min, subsequently heating the composite structure to 75°C to 85°C, maintaining the temperature for 25 min to 35 min, and then cooling the composite structure to the room temperature.

In some embodiments, the third curing includes steps of: preheating a composite structure of the base film and the second intermediate layer, which are coated with the third solution, at 50°C to 55°C for 5 min to 10 min, subsequently heating the composite structure to 65°C to 75°C, maintaining the temperature for 110 min to 130 min, and then cooling the composite structure to the room temperature.

In some embodiments, in the step of the first curing, the second curing, or the third curing, a heating rate is ≤2°C/min. By controlling the heating rate within the range, the controllability of the product quality is enhanced.

In some embodiments, in the step of the first curing, the second curing, or the third curing, a cooling rate is ≥1°C/min. After the temperature maintenance ends, rapid cooling treatment is carried out to prevent accumulation of thermal stress on a polymerized product.

In a second aspect, some embodiments of the present disclosure further propose a semi-solid-state secondary battery, including a positive electrode plate, an electrolyte separator, and a negative electrode plate, wherein the electrolyte separator is prepared by the preparation method as described in the first aspect.

The semi-solid-state secondary battery of the present disclosure uses the electrolyte separator prepared by the preparation method as described in the first aspect, which makes the semi-solid-state secondary battery have excellent safety performance as well as excellent electrochemical performance.

In some embodiments of the present disclosure, in the electrolyte separator, a thickness of the functional layer on the surface of the base film is in a range of 10 µm to 30 µm. By controlling the thickness of the functional layer within the range, it is conducive to balancing ion transfer efficiency, mechanical strength, energy density, and safety of the electrolyte separator.

In some embodiments of the present disclosure, in the electrolyte separator, the base film has a first side facing the positive electrode plate and a second side facing the negative electrode plate, and the functional layer is disposed on at least one of the first side and the second side.

In some embodiments of the present disclosure, the positive electrode plate, the electrolyte separator, and the negative electrode plate may be assembled into a stacked structure or a wound structure. A specific assembly method may be adjusted according to a specific type of the semi-solid-state secondary battery.

In some embodiments of the present disclosure, for example, a preparation method for a semi-solid-state secondary battery includes:
preparing a positive electrode plate, a negative electrode plate, and an electrolyte separator;
assembling the positive electrode plate, the electrolyte separator, and the negative electrode plate by stacking or winding to obtain a pre-assembled member; and
assembling the pre-assembled member with a casing to obtain the semi-solid-state secondary battery.

In the above preparation method, when the semi-solid-state secondary battery is a pouch battery, the casing is a membrane structure of an aluminum-plastic composite film, and the stacking assembly of the positive electrode plate, the electrolyte separator, and the negative electrode plate may be carried out on the membrane structure. When the semi-solid-state secondary battery is a hard-casing battery such as a square battery, the positive electrode plate, the electrolyte separator, and the negative electrode plate are typically assembled first, and then the assembled structure is placed in the casing.

In a third aspect, some embodiments of the present disclosure further provide an energy storage apparatus. The energy storage apparatus includes at least one semi-solid-state secondary battery as described in the second aspect. When the energy storage apparatus includes a plurality of batteries, the plurality of batteries may be connected via at least one of parallel connection and series connection.

In a fourth aspect, some embodiments of the present disclosure further provide an electrical device, including the semi-solid-state secondary battery as described in the third aspect.

It may be understood that the electrical device further includes an electrical device body, and the energy storage apparatus is configured to supply power to the electrical device.

In some embodiments of the present disclosure, the electrical device may include, but is not limited to, a container, a household energy storage system, a battery vehicle, an electric vehicle, a ship, a spacecraft, an electric toy, an electric tool, and the like. The spacecraft is, for example, an airplane, a rocket, a space shuttle, a spaceship, and the like. The electric toy includes, for example, a fixed or mobile electric toy, which is specifically, for example, an electric car toy, an electric ship toy, an electric airplane toy, or the like. The electric tool includes, for example, a metal cutting electric tool, a grinding electric tool, an assembly electric tool, and a railway electric tool, which is, for example, an electric drill, an electric grinder, an electric wrench, an electric screwdriver, an electric hammer, an impact drill, a concrete vibrator, and an electric planer.

The present disclosure is further described below through specific embodiments and comparative examples, but the present disclosed is not limited to these specific examples.

### Example 1

### 1. Preparation of an electrolyte separator

(1) Raw materials: 3.29 wt% triethylene glycol dimethacrylate + 1.175 wt% trimethylolpropane trifluoroacrylate + 0.235 wt% acrylonitrile + 0.1 wt% ammonium persulfate + 0.1 wt% azobisisobutyronitrile + 0.1 wt% benzoyl peroxide + 95 wt% liquid electrolyte solution (90 wt% (1M LiPF₆ EC:EMC:DMC=3:4:3 vol%) + 5 wt% hexaphenoxycyclotriphosphazene).

The liquid electrolyte solution was divided into three parts, namely a first electrolyte solution, a second electrolyte solution, and a third electrolyte solution, and a mass ratio of the first electrolyte solution, the second electrolyte solution, and the third electrolyte solution was 3.29:1.175:0.235.

The triethylene glycol dimethacrylate, the ammonium persulfate, and the first electrolyte solution in the raw materials were mixed to prepare a first solution.

The trimethylolpropane trifluoroacrylate, the azobisisobutyronitrile, and the second electrolyte solution in the raw materials were mixed to prepare a second solution.

The acrylonitrile, the benzoyl peroxide, and the third electrolyte solution in the raw materials were prepared into a third solution.

### (2) Preparation step:

In S100, a base film (a polypropylene film) was provided, the first solution is uniformly applied on a surface of the base film, placed in a segmented oven, preheated at 40°C for 10 min, heated to 60°C at a rate of ≤2°C/min, maintained at the temperature for 60 min, and then quickly cooled to room temperature, and a first intermediate layer was formed on the surface of the base film.

In S200, the second solution was uniformly applied on a surface of the first intermediate layer, placed in a segmented oven, preheated at 60°C for 5 min, heated to 80°C at a rate of ≤2°C/min, maintained at the temperature for 30 min, and then quickly cooled to the room temperature, and a second intermediate layer was formed on the surface of the base film.

In S300, the third solution was uniformly applied on a surface of the second intermediate layer, placed in a segmented oven, preheated at 50°C for 10 min, heated to 70°C at a rate of ≤2°C/min, maintained at the temperature for 120 min, and then quickly cooled to the room temperature, to obtain an electrolyte separator.

### 2. Assembly of a half-cell

A positive electrode material (lithium iron phosphate), a conductive agent Super, and polyvinylidene fluoride (PVDF) are mixed in N-methyl-2-pyrrolidone (NMP) in a ratio of 90:5:5, the resulting slurry was applied to an aluminum foil and dried under vacuum at 105°C for 10 h to obtain a positive electrode plate, and a counter electrode was a lithium sheet.

The positive electrode plate and the lithium sheet were cut into small discs with a diameter of 13 mm by using a cutting machine, and a positive electrode shell, an elastic sheet, a gasket, the positive electrode plate, the above-prepared electrolyte separator, the lithium sheet, and a negative electrode shell were assembled into a button battery in a glove box filled with argon (Ar).

### 3. Performance test

### (1) Conductivity test before and after polymerization

At 25°C, conductivity of a material of a functional layer of the electrolyte separator was tested using a conductivity meter.

### (2) Test of self-extinguishing time

A small amount of an electrolyte was put on the negative electrode shell of the buckle battery, and was ignited with an igniter for 5 s, and a self-extinguishing time was timed and observed.

### (3) Electrochemical performance test

Cycling performance and rate performance of the button battery assembled above were tested in a constant temperature test cabinet at 25°C by using a LAND test system. Cycling performance test was conducted with activation at 0.3C current density for 5 cycles, followed by cycling at a current density of 1 C, and all were within a voltage range of 2.0 to 3.75 V. Rate performance test was conducted at specified current densities of 10 mA^{·}g⁻¹, 30 mA^{·}g⁻¹, 50 mA^{·}g⁻¹, 70 mA^{·}g⁻¹, 100 mA^{·}g⁻¹, 10 mA^{·}g⁻¹, respectively, with 5 cycles at each current density.

### Example 2

A difference from Example 1 is that the trimethylolpropane trifluoroacrylate in the raw materials is replaced with pentaerythritol tetraacrylate.

### Example 3

Differences from Example 1 are as follows:
(1) Raw materials: 2.4 wt% triethylene glycol dimethacrylate + 0.6 wt% trimethylolpropane trifluoroacrylate + 0.2 wt% acrylonitrile + 0.1 wt% ammonium persulfate + 0.1 wt% azobisisobutyronitrile + 0.1 wt% benzoyl peroxide + 96.5 wt% liquid electrolyte solution (91.7 wt% (1M LiPF₆ EC:EMC:DMC=3:4:3 vol%) + 5 wt% hexaphenoxycyclotriphosphazene).

The liquid electrolyte solution was divided into three parts, namely a first electrolyte solution, a second electrolyte solution, and a third electrolyte solution, and a mass ratio of the first electrolyte solution, the second electrolyte solution, and the third electrolyte solution was 2.4:0.6:0.2.

### Example 4

Differences from Example 1 are as follows:
(1) Raw materials: 5.44 wt% triethylene glycol dimethacrylate + 2.04 wt% trimethylolpropane trifluoroacrylate + 0.34 wt% acrylonitrile + 0.1 wt% ammonium persulfate + 0.1 wt% azobisisobutyronitrile + 0.1 wt% benzoyl peroxide + 91.7 wt% liquid electrolyte solution (86.7 wt% (1M LiPF₆ EC:EMC:DMC=3:4:3 vol%) + 5 wt% hexaphenoxycyclotriphosphazene).

The liquid electrolyte solution was divided into three parts, namely a first electrolyte solution, a second electrolyte solution, and a third electrolyte solution, and a mass ratio of the first electrolyte solution, the second electrolyte solution, and the third electrolyte solution was 5.6:2.04:0.34.

### Example 5

Differences from Example 1 are as follows:
(1) The trimethylolpropane trifluoroacrylate, the benzoyl peroxide, and the second electrolyte solution in the raw materials were mixed to prepare a second solution; and the acrylonitrile, the azobisisobutyronitrile, and the third electrolyte solution in the raw materials were mixed to prepare a third solution.
(2) In S200, the second solution was uniformly applied on a surface of the first intermediate layer, placed in a segmented oven, preheated at 50°C for 10 min, heated to 70°C at a rate of ≤2°C/min, maintained at the temperature for 120 min, and then quickly cooled to the room temperature, and a second intermediate layer was formed on the surface of the base film.

In S300, the third solution was uniformly applied on a surface of the second intermediate layer, placed in a segmented oven, preheated at 60°C for 5 min, heated to 80°C at a rate of ≤2°C/min, maintained at the temperature for 30 min, and then quickly cooled to the room temperature, to obtain an electrolyte separator.

### Example 6

Differences from Example 1 are as follows:
(1) The triethylene glycol dimethacrylate, the azobisisobutyronitrile, and the first electrolyte solution in the raw materials were mixed to prepare a first solution; the trimethylolpropane trifluoroacrylate, the benzoyl peroxide, and the second electrolyte solution in the raw materials were mixed to prepare a second solution; and the acrylonitrile, the ammonium persulfate, and the third electrolyte solution in the raw materials were mixed to prepare a third solution.
(2) In S100, a base film (a polypropylene film) was provided, the first solution was uniformly applied on a surface of the base film, placed in a segmented oven, preheated at 60°C for 5 min, heated to 80°C at a rate of ≤2°C/min, maintained at the temperature for 30 min, and then quickly cooled to room temperature, and a first intermediate layer was formed on the surface of the base film.

In S200, the second solution was uniformly applied on a surface of the first intermediate layer, placed in a segmented oven, preheated at 50°C for 10 min, heated to 70°C at a rate of ≤2°C/min, maintained at the temperature for 120 min, and then quickly cooled to the room temperature, and a second intermediate layer was formed on the surface of the base film.

In S300, the third solution was uniformly applied on a surface of the second intermediate layer, placed in a segmented oven, preheated at 40°C for 10 min, heated to 60°C at a rate of ≤2°C/min, maintained at the temperature for 60 min, and then quickly cooled to the room temperature, to obtain an electrolyte separator.

### Comparative Example 1

Liquid electrolyte solution (1M LiPF₆ EC:EMC:DMC=3:4:3 vol%).

### Comparative Example 2

Differences from Example 1 are as follows:

### 1. Preparation of an electrolyte separator

(1) Raw materials: 4.7 wt% triethylene glycol dimethacrylate + 0.3 wt% ammonium persulfate + 95 wt% liquid electrolyte solution (90 wt% (1M LiPF₆ EC:EMC:DMC=3:4:3 vol%) + 5 wt% hexaphenoxycyclotriphosphazene).

The triethylene glycol dimethacrylate, the ammonium persulfate, and the electrolyte in the raw materials were mixed to prepare a first solution.

### (2) Preparation step:

In S100, a base film (a polypropylene film) was provided, the first solution was uniformly applied on a surface of the base film, placed in a segmented oven, preheated at 40°C for 10 min, heated to 60°C at a rate of ≤2°C/min, maintained at the temperature for 60 min, and then quickly cooled to room temperature, to obtain an electrolyte separator.

### Comparative Example 3

Differences from Example 1 are as follows:

### 1. Preparation of an electrolyte separator

(1) Raw materials: 3.54 wt% triethylene glycol dimethacrylate + 1.26 wt% trimethylolpropane trifluoroacrylate + 0.1 wt% ammonium persulfate + 0.1 wt% azobisisobutyronitrile + 95 wt% liquid electrolyte solution (85 wt% (1M LiPF₆ EC:EMC:DMC=3:4:3 vol%) + 5 wt% hexaphenoxy cyclotriphosphazene).

The liquid electrolyte solution was divided into two parts, namely a first electrolyte solution and a second electrolyte solution, and a mass ratio of the first electrolyte solution to the second electrolyte solution is 3.54:1.26.

The triethylene glycol dimethacrylate, the ammonium persulfate, and the first electrolyte solution in the raw materials were mixed to prepare a first solution.

The trimethylolpropane trifluoroacrylate, the azobisisobutyronitrile, and the second electrolyte solution in the raw materials were mixed to prepare a second solution.

### (2) Preparation step:

In S100, a base film (a polypropylene film) was provided, the first solution was uniformly applied on a surface of the base film, placed in a segmented oven, preheated at 40°C for 10 min, heated to 60°C at a rate of ≤2°C/min, maintained at the temperature for 60 min, and then quickly cooled to room temperature, and a first intermediate layer was formed on the surface of the base film.

In S200, the second solution was uniformly applied on a surface of the first intermediate layer, placed in a segmented oven, preheated at 60°C for 5 min, heated to 80°C at a rate of ≤2°C/min, maintained at the temperature for 30 min, and then quickly cooled to the room temperature, to obtain an electrolyte separator.

### Comparative Example 4

Differences from Example 1 are as follows:
(1) Raw materials: 1.19 wt% triethylene glycol dimethacrylate + 0.425 wt% trimethylolpropane trifluoroacrylate + 0.085 wt% acrylonitrile + 0.1 wt% ammonium persulfate + 0.1 wt% azobisisobutyronitrile + 0.1 wt% benzoyl peroxide + 98 wt% liquid electrolyte solution (93 wt% (1M LiPF₆ EC:EMC:DMC=3:4:3 vol%) + 5 wt% hexaphenoxycyclotriphosphazene).

The liquid electrolyte solution was divided into three parts, namely a first electrolyte solution, a second electrolyte solution, and a third electrolyte solution, and a mass ratio of the first electrolyte solution, the second electrolyte solution, and the third electrolyte solution was 1.19:0.425:0.085.

### Comparative Example 5

Differences from Example 1 are as follows:
(1) Raw materials: 6.09 wt% triethylene glycol dimethacrylate + 2.175 wt% trimethylolpropane trifluoroacrylate + 0.435 wt% acrylonitrile + 0.1 wt% ammonium persulfate + 0.1 wt% azobisisobutyronitrile + 0.1 wt% benzoyl peroxide + 91 wt% liquid electrolyte solution (86 wt% (1M LiPF₆ EC:EMC:DMC=3:4:3 vol%) + 5 wt% hexaphenoxycyclotriphosphazene).

### Comparative Example 6

Differences from Example 1 are as follows:
(1) Raw materials: 2.35 wt% triethylene glycol dimethacrylate + 1.645 wt% trimethylolpropane trifluoroacrylate + 0.705 wt% acrylonitrile + 0.1 wt% ammonium persulfate + 0.1 wt% azobisisobutyronitrile + 0.1 wt% benzoyl peroxide + 95 wt% liquid electrolyte solution (90 wt% (1M LiPF₆ EC:EMC:DMC=3:4:3 vol%) + 5 wt% hexaphenoxycyclotriphosphazene).

The liquid electrolyte solution was divided into three parts, namely a first electrolyte solution, a second electrolyte solution, and a third electrolyte solution, and a mass ratio of the first electrolyte solution, the second electrolyte solution, and the third electrolyte solution was 2.35:1.645:0.705.

### Comparative Example 7

Differences from Example 1 are as follows:
(1) Raw materials: 3.995 wt% triethylene glycol dimethacrylate + 0.611 wt% trimethylolpropane trifluoroacrylate + 0.094 wt% acrylonitrile + 0.1 wt% ammonium persulfate + 0.1 wt% azobisisobutyronitrile + 0.1 wt% benzoyl peroxide + 95 wt% liquid electrolyte solution (90 wt% (1M LiPF₆ EC:EMC:DMC=3:4:3 vol%) + 5 wt% hexaphenoxycyclotriphosphazene).

The liquid electrolyte solution was divided into three parts, namely a first electrolyte solution, a second electrolyte solution, and a third electrolyte solution, and a mass ratio of the first electrolyte solution, the second electrolyte solution, and the third electrolyte solution was 3.995:0.611:0.094.

### Comparative Example 8

Differences from Example 1 are as follows:

### Preparation step:

(2) In S100, a base film (a polypropylene film) was provided, the first solution and the second solution were uniformly applied on a surface of the base film, placed in a segmented oven, preheated at 60°C for 10 min, heated to 80°C at a rate of ≤2°C/min, maintained at the temperature for 60 min, and then quickly cooled to room temperature, and a first intermediate layer was formed on the surface of the base film.

In S200, the third solution was uniformly applied on a surface of the first intermediate layer, placed in a segmented oven, preheated at 50°C for 10 min, heated to 70°C at a rate of ≤2°C/min, maintained at the temperature for 120 min, and then quickly cooled to the room temperature, to obtain an electrolyte separator.

### Comparative Example 9

Differences from Example 1 are as follows:

### Preparation step:

In S100, a base film (a polypropylene film) was provided, the first solution was uniformly applied on a surface of the base film, placed in a segmented oven, preheated at 40°C for 10 min, heated to 60°C at a rate of ≤2°C/min, maintained at the temperature for 60 min, and then quickly cooled to room temperature, and a first intermediate layer was formed on the surface of the base film.

In S200, the second solution and the third solution were uniformly applied on a surface of the first intermediate layer, placed in a segmented oven, preheated at 60°C for 5 min, heated to 80°C at a rate of ≤2°C/min, maintained at the temperature for 30 min, and then quickly cooled to the room temperature, to obtain an electrolyte separator.

### Test result:

**Table 1. Test results of conductivity and flame retardancy in various examples and comparative examples**

| Sample | Conductivity (mS/cm) | Self-extinguishing time (s) |
|---|---|---|
| Example 1 | 8.985 | Unburned |
| Example 2 | 8.752 | 2 s |
| Example 3 | 8.623 | 5 s |
| Example 4 | 8.568 | Unburned |
| Example 5 | 8.765 | Unburned |
| Example 6 | 8.802 | Unburned |
| Comparative Example 1 | - | 20 s |
| Comparative Example 2 | 8.224 | Unburned |
| Comparative Example 3 | 8.478 | Unburned |
| Comparative Example 4 | Ungelled | 15 s |
| Comparative Example 5 | 6.523 | Unburned |
| Comparative Example 6 | 8.213 | Unburned |
| Comparative Example 7 | 8.462 | Unburned |
| Comparative Example 8 | 8.224 | Unburned |
| Comparative Example 9 | 8.475 | Unburned |

**Table 2. Test results of cycling performance in various examples and comparative examples**

| Electrolyte | Initial coulombic efficiency | Average coulombic efficiency after 20 cycles of stabilization | Capacity retention rate after 400 cycles |
|---|---|---|---|
| Example 1 | 91.54% | 99.92% | 92.4% |
| Example 2 | 90.73 | 99.89% | 91.83% |
| Example 3 | 90.65% | 99.87% | 87.65% |
| Example 4 | 90.51% | 99.83% | 86.32% |
| Example 5 | 91.23% | 99.86% | 90.97% |
| Example 6 | 91.37% | 99.88% | 89.88% |
| Comparative Example 1 | 92.14% | 99.96% | 90.3% |
| Comparative Example 2 | 86.72% | 99.73% | 82.79% |
| Comparative Example 3 | 88.62% | 99.82% | 84.89% |
| Comparative Example 4 | - | - | - |
| Comparative Example 5 | 85.45% | 99.52% | 75.26% |
| Comparative Example 6 | 88.58% | 99.57% | 82.22% |
| Comparative Example 7 | 87.32% | 99.24% | 80.58% |
| Comparative Example 8 | 89.82% | 99.32% | 85.28% |
| Comparative Example 9 | 90.10% | 99.64% | 85.54% |

**Table 3. Test results of rate performance in various examples and comparative examples**

| Sample | 10 | 30 | 50 | 70 | 100 |
|---|---|---|---|---|---|
| | mA˙g-1 | mA˙g-1 | mA˙g-1 | mA˙g-1 | mA˙g-1 |
| Example 1 | 149.96 | 146.92 | 144.08 | 141.38 | 137.76 |
| Example 2 | 148.57 | 145.77 | 143.29 | 140.9 | 136.52 |
| Example 3 | 145.94 | 143.98 | 141.02 | 138.87 | 135.43 |
| Example 4 | 146.75 | 143.26 | 139.07 | 136.53 | 134.88 |
| Example 5 | 147.88 | 145.92 | 143.79 | 140.76 | 138.58 |
| Example 6 | 147.76 | 145.66 | 142.21 | 140.28 | 138.08 |
| Comparative Example 1 | 150.30 | 147.24 | 144.19 | 141.45 | 138.34 |
| Comparative Example 2 | 143.72 | 140.58 | 137.54 | 135.67 | 133.68 |
| Comparative Example 3 | 144.72 | 143.26 | 140.77 | 138.74 | 134.52 |
| Comparative Example 4 | - | - | - | - | - |
| Comparative Example 5 | 142.53 | 140.25 | 137.68 | 135.72 | 132.17 |
| Comparative Example 6 | 144.23 | 141.87 | 138.52 | 135.88 | 132.97 |
| Comparative Example 7 | 143.46 | 141.09 | 138.92 | 135.86 | 133.05 |
| Comparative Example 8 | 143.53 | 141.27 | 137.98 | 135.32 | 132.71 |
| Comparative Example 9 | 145.42 | 142.62 | 138.87 | 135.41 | 133.07 |

The test results of Examples 1-6 and Comparative Examples 1-9 prove that the electrolyte separator prepared by the gradient copolymerization technology described in the present disclosure has excellent flame retardancy and also has excellent ionic conductivity and material stability. The semi-solid-state secondary battery prepared in this way has significantly improved safety performance, and electrochemical performance thereof such as rate performance and cycling performance are similar to those of the liquid electrolyte.

By comparing Examples 1-6 with Comparative Example 1, it may be proved that, compared with the existing common liquid electrolyte, the semi-solid-state electrolyte (separator) of the present disclosure has better flame retardancy.

By comparing Example 1 with Comparative Examples 2 and 3, it may be proved that, by adding the multi-branched monomer to polymerize to form a three-dimensional network structure, conductivity of the electrolyte separator can be improved, stability of the electrode material is ensured, and it is conducive to improving cycling performance of the semi-solid-state secondary battery.

By comparing Example 1 with Comparative Example 3, it may be proved that, by finally adding the cyanide-containing monomer, interfacial compatibility between the electrolyte separator and the electrolyte is improved, the conductivity of the electrolyte separator can be improved, and it is conducive to improving rate performance of the semi-solid-state secondary battery.

By comparing Example 1 with Comparative Examples 8 and 9, it may be proved that, compared with the synchronous copolymerization method, in the present disclosure, the linear monomer, the multi-branched monomer, and the cyanide-containing monomer are added in sequence for gradient polymerization to form a layered structure. The layers interact with each other, thereby improving rate performance and cycling performance of the semi-solid-state secondary battery.

By comparing Example 1 with Comparative Examples 4-7, it may be proved that, when the total mass content of the linear monomer, the multi-branched monomer, and the nitrile-containing monomer in the raw materials does not meet the range of 3% to 8% or the mass ratio of the linear monomer, the multi-branched monomer, and the nitrile-containing monomer does not meet the range of (12 to 16): (3 to 6): 1, the electrolyte solidifies seriously and cannot form gel, or the gel state is poor, resulting in poor rate performance and cycling performance of the semi-solid-state secondary battery.

By comparing Example 1 with Comparative Example 2, it may be proved that, when the multi-branched monomer is a fluorine-containing monomer, it is more conducive to improving conductivity of the electrolyte separator, thereby being more conducive to improving flame retardancy and rate performance of the semi-solid-state secondary battery.

By comparing Example 1 with Comparative Examples 5 and 6, it may be proved that, compared with increasing or decreasing the temperatures (holding temperatures, the same below) of the first curing, the second curing, and the third curing in sequence, making the temperature of the second curing higher than the temperature of the first curing and lower than the temperature of the third curing is more conducive to enhancing polymerization between layers of the electrolyte, thereby being more conducive to improving rate performance and cycling performance of the semi-solid-state secondary battery.

The above are only preferred embodiments of the present disclosure and are not intended to limit the present disclosure. Any modifications, equivalent replacements, improvements, and the like should be included in the scope of protection of the present disclosure.

## Claims

1. A method for preparing an electrolyte separator of a semi-solid-state secondary battery, comprising following steps:
coating a first solution on a surface of a base film and performing a first curing to form a first intermediate layer on the surface of the base film, wherein the first solution comprises a linear monomer, a first thermal initiator, and a first electrolyte solution;
coating a second solution on a surface of the first intermediate layer and performing a second curing to form a second intermediate layer on the surface of the base film, wherein the second solution comprises a multi-branched monomer, a second thermal initiator, and a second electrolyte solution; and
coating a third solution on a surface of the second intermediate layer and performing a third curing to form a gel-like functional layer on the surface of the base film to obtain the electrolyte separator, wherein the third solution comprises a nitrile-containing monomer, a third thermal initiator, and a third electrolyte solution,
wherein based on 100% of a total mass content of the first solution, the second solution, and the third solution, a total mass content of the linear monomer, the multi-branched monomer, and the nitrile-containing monomer is in a range of 3% to 8%, and a mass ratio of the linear monomer, the multi-branched monomer, and the nitrile-containing monomer is (12 to 16):(3 to 6):1.

2. The method according to claim 1, wherein the linear monomer comprises at least one of triethylene glycol dimethacrylate, methyl methacrylate, vinyl acetate, trifluoroethyl methacrylate, or ethylene glycol diacrylate.

3. The method according to claim 1, wherein the multi-branched monomer comprises at least one of trimethylolpropane trifluoroacrylate, pentaerythritol tetraacrylate, trimethylolpropane, pentaerythritol, four-arm polyethylene glycol-tetraacrylate, or hyperbranched polyester polyol.

4. The method according to claim 1, wherein the nitrile-containing monomer comprises at least one of acrylonitrile or methacrylonitrile.

5. The method according to claim 1, wherein the first electrolyte solution, the second electrolyte solution, and the third electrolyte solution independently comprise a lithium salt, an electrolyte, and a flame retardant, and a content of the flame retardant is in a range of 2% to 15%.

6. The method according to claim 5, wherein the lithium salt comprises one or more of lithium hexafluorophosphate (LiPF₆), lithium bis(trifluoromethanesulphonyl)imide (LiFSI), lithium tetrafluoroborate (LiBF₄), lithium bis(oxalato)borate (LiBOB), lithium difluoro(oxalato)borate (LiDFOB), or lithium bis(trifluoromethylsulfonyl)imide (LiTFSI).

7. The method according to claim 5, wherein the electrolyte comprises one or more of ethylene carbonate (EC), propylene carbonate (PC), butanedinitrile (BC), diethyl carbonate (DEC), dimethyl carbonate (DMC), dimethoxyethane (DME), ethyl methyl carbonate (EMC), triethyl phosphate (TEP), or fluoroethylene carbonate (FEC).

8. The method according to claim 5, wherein the flame retardant comprises at least one of a phosphorus-nitrogen composite flame retardant, a phosphorus-based flame retardant, a phosphorus-fluorine composite flame retardant, a phosphazene-based flame retardant, or a bromine-based flame retardant.

9. The method according to claim 1, wherein the first thermal initiator, the second thermal initiator, and the third thermal initiator independently comprise at least one of azobisisobutyronitrile, azobisisovaleronitrile , benzoyl peroxide, dicumyl peroxide, or ammonium persulfate.

10. The method according to claim 1, wherein the first curing is performed at a temperature ranging from 40°C to 60°C, the second curing is performed at a temperature ranging from 60°C to 80°C, and the third curing is performed at a temperature ranging from 50°C to 70°C.

11. The method according to claim 10, wherein the first curing comprises: preheating the base film, which is coated with the first solution, at 40°C to 45°C for 5 min to 10 min, subsequently heating the base film to 55°C to 60°C at a heating rate ≤2°C/min, maintaining the temperature for 50 min to 70 min, and then cooling the base film to room temperature.

12. The method according to claim 10, wherein the second curing comprises: preheating a composite structure of the base film and the first intermediate layer, which are coated with the second solution, at 60°C to 65°C for 5 min to 10 min, subsequently heating the composite structure to 75°C to 80°C at a heating rate ≤2°C/min, maintaining the temperature for 25 min to 35 min, and then cooling the composite structure to a room temperature.

13. The method according to claim 10, wherein the third curing comprises: preheating a composite structure of the base film and the second intermediate layer, which are coated with the third solution, at 50°C to 55°C for 5 min to 10 min, subsequently heating the composite structure to 65°C to 75°C at a heating rate ≤2°C/min, maintaining the temperature for 110 min to 130 min, and then cooling the composite structure to a room temperature.

14. A semi-solid-state secondary battery, comprising a positive electrode plate, an electrolyte separator, and a negative electrode plate, wherein
the electrolyte separator is prepared by the method according to any one of claims 1 to 13.

15. An energy storage apparatus, comprising the semi-solid-state secondary battery according to claim 14.
